# EUROPÄISCHE PATENTSCHRIFT

(11) **EP 0 663 432 B1**
(45) Veröffentlichungstag und Bekanntmachung des Hinweises auf die Patenterteilung: **09.05.2001**
(21) Anmeldenummer: 94113864.6
(22) Anmeldetag: 05.09.1994
(51) Int. Cl.: C09K 5/04, C09K 3/30

(54) **Gasgemisch zur Funktionsprüfung von Rauchmeldern**
Gas mixture for function testing of smoke detectors
Mélange de gaz pour tester le fonctionnement des détecteurs de fumée

(30) Priorität: 12.01.1994 CH 8794
(43) Veröffentlichungstag der Anmeldung: 19.07.1995
(73) Patentinhaber: Siemens Building Technologies AG, 8034 Zürich (CH)
(72) Erfinder: Forster, Martin, Dr., CH-8645 Jona (CH); Wyss, Erich, Dr., CH-8708 Männedorf (CH)
(74) Vertreter: Dittrich, Horst, Dr.

(56) Entgegenhaltungen:
- EP-A- 0 443 912
- WO-A-91/11495
- WO-A-91/13968
- WO-A-92/00240
- WO-A-93/15162
- WO-A-94/04629
- PATENT ABSTRACTS OF JAPAN vol. 016, no. 183 (C-0936) 6. Mai 1992 & JP-A-04 025 533 (SEKISUI PLASTICS CO LTD) 29. Januar 1992
- PATENT ABSTRACTS OF JAPAN vol. 015, no. 181 (C-0830) 9. Mai 1991 & JP-A-03 043 486 (EARTH CHEM CORP LTD) 25. Februar 1991

## Beschreibung

Die Erfindung betrifft ein Gasgemisch zur Bildung von Aerosolen zur Funktionsprüfung von Rauchmeldern.

Rauchmelder werden zur Feststellung von Rauchpartikeln oder Aerosolen, die bei einem Brand entstehen können, eingesetzt. Zu den handelsüblichen Rauchmeldern gehören Ionisationsrauchmelder und Streulichtrauchmelder. Erstere messen die Leitfähigkeit von der sich in einer Messkammer befindlichen ionisierten Luft. Gelangt Rauch in diese Messkammer fällt die Leitfähigkeit der Luft. Letztere messen Licht, das an Rauchpartikeln oder Aerosolen, die in eine Messkammer gelangt sind, gestreut wird.

Rauchmelder und Rauchmeldersysteme haben meist eine Betriebsdauer von mehren Jahren und erfordern, um eine einwandfreie Funktion sicherzustellen, eine periodische Funktionsprüfung. In der bisherigen Praxis sind Rauchmelder jeweils durch die Erzeugung eigentlicher Feuer oder von Aerosolen und Partikeln, die echte Rauchpartikel simulieren, auf ihre Funktionstüchtigkeit geprüft worden. Die erste Methode ist durch ihre Umständlichkeit und schlechte Reproduzierbarkeit ungeeignet. Die zweite Methode ist auf verschiedene Weisen realisiert worden. Eine ist die Erzeugung von Nebel aus Wassertröpfchen, was aber den Nachteil eines Niederschlags von Wasser im Melderinnern nach sich zieht. Der Wasserniederschlag führt zu einer verlängerten Funktionsunfähigkeit des Melders bis das Wasser vollständig verdunstet ist. Ähnlich ist der Nachteil beim Einsatz eines Treibgases mit Zusatzsubstanzen, die Rauchpartikel simulieren. Auch diese Zusatzsubstanzen können sich niederschlagen. Es zeigte sich auch, dass ihre Anwendung auf Ionisationsmelder begrenzt ist und bei Streulichtmeldern oft unwirksam ist. In neuester Zeit wurden Treibgase mit hohem Molekulargewicht eingesetzt, die ohne Zusatzsubstanzen ein Aerosol zu simulieren vermochten. Ein Treibgasgemisch mit geeignetem Siedepunkt der Komponenten, zwischen -20°C und +10°C, zeigte sich als sehr wirksam und für alle Meldertypen anwendbar. Die meist verwendeten Treibgase waren die vollständig halogenierten Kohlenwasserstoffe, die auch die Bedingungen der Unbrennbarkeit und Ungiftigkeit erfüllten. Eines dieser Gasgemische ist in CH 501 284 beschrieben.

Nach der im September 1987 beschlossenen Treaty of Montreal ist aber der Einsatz vollständig halogenierter Kohlenwasserstoffe wegen ihrer schädigenden Wirkung auf die Ozonschicht ab 1995 in allen Ländern verboten, und somit sind auch die obengenannten Treibgase nicht mehr verwendbar. In vielen Ländern ist ihr Einsatz auch schon heute verboten, wie zum Beispiel ab 1993 in der Schweiz nach der schweizerischen Stoffverordnung.

In der EP-A-0 443 912 von Atochem ist ein Gasgemisch beschrieben, das der Ozonschicht keinen Schaden zufügt. Das Gasgemisch enthält einen Anteil Dimethyläther und einen Anteil 1,1,1,2-Tetrafluorethan. Während dieses Gasgemisch in der Verwendung in Kühlgeräten und als Treibgas gute Resultate erbringt, ist es für die spezielle Verwendung als Prüfgas für Rauchmelder nicht ausreichend gut geeignet. Denn da das Gasgemisch keine Aerosole. enthält, können sich allenfalls durch die Abkühlung der Luft Wassertröpfchen bilden, die einen Rauchmelder möglicherweise in Alarm versetzen können. Die Bildung dieser Wassertröpfchen ist aber von der herrschenden Luftfeuchtigkeit abhängig, so dass dieses Gasgemisch für die Prüfung von Rauchmeldern nicht zuverlässig und daher ungeeignet ist.

Aufgrund dieses Standes der Technik wurde der Erfindung die Aufgabe gestellt, ein aerosolbildendes Gasgemisch zur Funktionsprüfung von Rauchmeldern zu schaffen, das die folgenden Bedingungen erfüllt:
- Das Treibgas darf keine ozonschichtschädigenden Bestandteile enthalten.
- Das Gasgemisch soll unbrennbar sein.
- Das Gasgemisch soll für die Anwender und deren Umgebung ungiftig sein.
- Der Überdruck des Doseninhaltes soll nach den gesetzlichen Bestimmungen für in Dosen abgefüllte Gase maximal 1.2·10⁵ Pa (12.0 bar) bei 50°C betragen. (In der Praxis enthält die Dose noch 0.5·10⁵ Pa (0.5 bar) Luft, da aus Kostengründen die Dose nicht vollständig evakuiert werden kann. Das Gasgemisch darf deshalb bei 50°C nur einen Überdruck von maximal 11.5·10⁵ Pa (11.5 bar) erzeugen.)
- Das Gasgemisch soll insbesondere ein Aerosol bilden, das bei allen Anwendungen und Umgebungen von Rauchmeldern durch verschiedene Typen von Rauchmeldern detektiert werden kann.

Zur Lösung dieser Aufgabe wurde eine Mischung aus 80 bis 60 Gewichtsprozent eines fluor- und wasserstoffhaltigen Treibgases wie 1,1,1,2 Tetrafluorethan und 20 bis 40 Gewichtsprozent eines druckmindernden Kohlenwasserstoffes oder Äther geschaffen, das den gewünschten Überdruck aufweist und ungiftig, unbrennbar sowie auch für die Ozonschicht unschädlich ist. Das druckmindernde Gas besteht aus mindestens einem der Stoffe Dime-thyläther (CH₃-O-CH₃), n-Butan, Isobutan, einer Mischung von Propan/n-Butan, einer Mischung von Propan/lso-Butan, Methylal (CH₃-O-CH₂-O-CH₃), Methyl-Ethyläther (CH₃-O-CH₂-CH₃) und Ethenyl-Methyläther (CH₃-O-CH=CH₂). Zur Optimierung der Aerosolbildung, die auch in allen Anwendungen und Umgebungen von Rauchmeldern genügend ist, ist der obengenannten Mischung in kleiner Menge ein aerosolbildender Stoff gemäss Anspruch 1 beigemischt.

In den Unteransprüchen sind die Mischverhältnisse der Komponenten des Gasgemischs beschrieben.

Die ersten Bedingungen für das Gasgemisch ist die Schonung der Ozonschicht und die Unbrennbarkeit des Gasgemisches. Von diesen Bedingungen ausgehend kommen als Treibgase nur chlorlose Gase in Frage, da das Chlor die Ozonschicht bekannterweise abbaut. Jedoch darf das Gasgemisch einen nicht vollständig fluorierten Kohlenwasserstoff enthalten, da dieser schon in den unteren Schichten der Erdatmosphäre abgebaut wird. Zugleich wird ein solches Gas durch das Fluor unbrennbar. Hieraus fällt die Wahl auf 1,1,1,2-Tetrafluorethan (CH₂F-CF₃). Dieses Gas ist unter dem Handelsnamen Dymel 134 bekannt, hat ein Ozonabbaupotential von Null und ist vollständig unbrennbar. Jedoch darf dieses Gas nicht rein in Dosen abgefüllt verwendet werden, da sein Überdruck bei 50°C 12.3·10⁵ Pa (12.3 bar) beträgt, was über der gesetzlichen Bestimmung vieler Industrieländer für gasgefüllte Dosen liegt. Um diese gesetzliche Bestimmung dennoch zu erfüllen, wird dem 1,1,1,2-Tetrafluorethan (CH₂F-CF₃) ein druckminderndes Gas beigefügt. Damit die Gasmischung aber weiterhin als Treibgas dienen kann, soll das druckmindernde Gas einen tiefen Siedepunkt aufweisen, wodurch nur Gase in Frage kommen, deren Moleküle nicht allzu gross sind. Unter diesen Gasen sind die kurzkettigen Kohlenwasserstoffe mit maximal sechs C-Atomen und die kurzkettigen Äther mit maximal fünf C-Atomen, wie in folgender Aufführung:
Dimethyläther (CH₃-O-CH₃):
   Dieses Gas hat ebenfalls ein Ozonabbaupotential von Null, gilt bei einem MAK-Wert von 1000 ppm als ungiftig und weist einen Überdruck von 10.3·10⁵ Pa (10.3 bar) bei 50°C auf. Da Dimethyläther sowie alle weiteren hier aufgeführten Stoffe aber brennbar sind, dürfen sie nur in einem maximalen Mischverhältnis von 50 Gewichtsprozenten dem 1,1,1,2-Tetrafluorethan (CH₂F-CF₃) beigemischt werden, damit das resultierende Gasgemisch unbrennbar bleibt. (Ein Gasgemisch aus einem brennbaren und einem unbrennbaren Gas gilt nach allgemeiner Regel als unbrennbar sofern die brennbare Komponente mit maximal 50 Gewichtsprozenten vertreten ist.) Dimethyläther als druckmindernde Komponente hat zusätzlich die besondere Eigenschaft; mit CH₂F-CF₃ eine stark nicht-ideale Mischung zu bilden, was in diesem Fall zu einer Dampfdruckerniedrigung führt. Der berechnete Überdruck einer Mischung aus 70 Gewichtsprozenten CH₂F-CF₃ und 30 Gewichtsprozenten CH₃-O-CH₃ beträgt 11.6·10⁵ Pa (11.6 bar) bei 50°C, der gemessene Überdruck beträgt aber nur 10.5·10⁵ Pa (10.5 bar).
   Eine solche Gasmischung ist in WO 91/13968 und EP 0 443 912 zwecks Anwendungen als Kältemittel, Treibgas oder Schäummittel beschrieben.
Weitere mögliche druckmindernde Gase sind folgende:
n-Butan (CH₃-CH₂-CH₂-CH₃):
   Überdruck von 4·10⁵ Pa (4 bar) bei 50°C
Isobutan 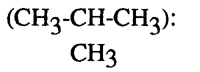 Überdruck von 5.8·10⁵ Pa (5.8 bar) bei 50°C
Propan/n-Butan -Mischung (CH₃-CH₂-CH₃ + CH₃-CH₂-CH₂-CH₃) im Gewichtsverhältnis von 1 zu 3 :
   Überdruck von 8.2·10⁵ Pa (8.2 bar) bei 50°C
Propan/Iso-Butan -Mischung 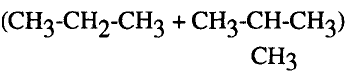 im Gewichtsverhältnis von 1 zu 4:
   Überdruck von 8.4·10⁵ Pa (8.4 bar) bei 50°C
Methylal (Formaldehyd-dimethylacetal, CH₃-O-CH₂-O-CH₃):
   Überdruck 0.2·10⁵ Pa (0.2 bar) bei 50°C
Methyl-Ethyläther (CH₃-O-CH₂-CH₃):
   Überdruck 3.1·10⁵ Pa (3.1 bar) bei 50°C
Ethenyl-Methyläther (CH₃-O-CH=CH₂):
   Überdruck 2.2·10⁵ Pa (2.2 bar) bei 50°C

Der minimale Anteil in Gewichtsprozenten der obengenannten druckmindernden Gase ist 5%, damit der Überdruck der Mischung mit 1,1,1,2-Tetrafluorethan maximal 11.5·10⁵ Pa (11.5 bar) beträgt.

Der Dimethyläther wirkt zugleich als Aerosolbildner, jedoch ist die Aerosolbildung in einigen Anwendungsbereichen von Rauchmeldern nicht genügend. Damit in allen Anwendungsbereichen der Rauchmelder, also auch in Umgebungen mit tiefen Temperaturen bis -20°C sowie hohen Temperaturen bis +35°C und Umgebungen unterschiedlicher Luftfeuchtigkeit, ein Aerosol gebildet werden kann, das vom Rauchmelder auch detektiert werden kann, wird der Gasmischung eine dritte Komponente hinzugefügt. Stoffe mit der gewünschten aerosolbildenden Wirkung sind im folgenden aufgeführt:
Sebazinsäure-bis-2-ethyl-hexylester,
Sebazinsäure-diester mit diversen Estergruppen,
Paraffinöl,
Phthalsäure-dibutylester,
Phthalsäure-bis-2-ethyl-hexylester,
Butyloxyäthanol,
Triäthylenglykol,
Triäthylenglykol-diester und
ähnliche Stoffe

Diese Stoffe zeichnen sich dadurch aus, dass sie organische Stoffe sind mit jeweils mindestens drei Kohlenstoffatomen und mindestens drei Wasserstoffatomen. Sie werden in einem Mischverhältnis von maximal 2 Gewichtsprozenten der Gasmischung beigefügt. Diese sind alle nur minderwertig oder gar nicht giftig.

### Ausführungsbeispiel:

Beim Einsatz eines Gasgemisches zur Funktionsprüfung von Rauchmeldern müssen verschiedene Kriterien beachtet werden. Diese sind die Alarmierbarkeit verschiedener Typen von Rauchmeldern mit verschiedenen Empfindlichkeiten, ihre Alarmierbarkeit bei verschiedenen Umgebungstemperaturen, die Dauer bis zur Alarmierung durch den Rauchmelder und die Dauer, während der der Rauchmelder im Alarmzustand bleibt. Eine allzu lange Dauer im Alarmzustand, zum Beispiel von mehreren Minuten, ist für die effiziente Prüfung vieler Melder nicht zweckmässig. Auch sind die verwendete Vorrichtung zur Prüfung der Melder, der Düsentyp an der Dose, die Dauer des Gasstosses und das Eindringverhalten des Gases in das Innere der Rauchmelder ausschlaggebend. Schliesslich ist auch darauf zu achten, dass die Funktionsprüfung der Melder reproduzierbar ist. Die Mischverhältnisse der drei Gaskomponenten werden gemäss dieser Kriterien bestimmt.

In verschiedenen Feldtests von Rauchmeldern der Typen Ionisationsmelder und Streulichtmelder wurden unter Verwendung einer Prüfvorrichtung von der Art, wie in CH 501 284 beschrieben, verschiedene Mischverhältnisse auf die obengenannten Kriterien geprüft. Insbesondere wurde die Abhängigkeit der Alarmierbarkeit und der Dauer der Alarmierung von der Menge des beigemischten Aerosolbildners bestimmt. Aus diesen Feldtests ging hervor, dass eine Mischung von 70% ± 0.5% 1,1,1,2 -Tetrafluorethan (CH₂F-CF₃), 29.98 ± 0.5% Dimethyläther (CH₃-O-CH₃) und 0.02 ± 0.001% Sebazinsäure-bis-2-ethyl-hexylester (C₂₆H₅₀O₄) in den verschiedenen Anwendungen bei der Alarmierung von Ionisations- und Streulichtmeldern unterschiedliche, aber genügende Resultate erbrachte.

## Patentansprüche

1. Gasgemisch zur Bildung eines Aerosols zur Funktionsprüfung eines Rauchmelders bestehend aus 80 bis 60 Gewichtsprozenten 1,1,1,2-Tetrafluorethan und 20 bis 40 Gewichtsprozenten eines druckmindernden Gases, welches aus mindestens einem der Stoffe, n-Butan, Isobutan, einer Mischung von Propan/n-Butan, einer Mischung von Propan/Iso-Butan, Dimethyläther (CH₃-O-CH₃), Methylal (CH₃-O-CH₂-O-CH₃), Methyl-Ethyläther (CH₃-O-CH₂-CH₃) und Ethenyl-Methyläther (CH₃-O-CH=CH₂) besteht, dadurch gekennzeichnet, dass das Gasgemisch eine beigemischte, aerosolbildende Komponente enthält, die aus mindestens einem der Stoffe Sebazinsäure-bis-2-ethyl-hexylester, Sebazinsäure-diester mit diversen Estergruppen, Paraffinöl, Phthalsäure- dibutylester, Phthalsäure-bis-2-ethyl-hexylester, Butyloxyäthanol, Triäthylenglykol und Triäthylenglykol-diester besteht und dem genannten Gasgemisch in einem Mischverhätnis von maximal 2 Gewichtsprozenten beigemischt ist.

2. Gasgemisch nach Patentanspruch 1, dadurch gekennzeichnet, dass das Gasgemisch zu 72 bis 68 Gewichtsprozent 1,1,1,2-Tetrafluorethan und zu 28 bis 32 Gewichtsprozent Dime-thyläther enthält.

3. Gasgemisch nach Patentanspruch 2, dadurch gekennzeichnet, dass die aerosolbildende Komponente Sebazinsäure-bis-2-ethyl-hexylester ist und sie in einem Mischverhältnis von maximal 2 Gewichtsprozenten dem 1,1,1,2-Tetrafluorethan und dem Dimethyläther beigemischt ist.

4. Gasgemisch nach Patentanspruch 4, dadurch gekennzeichnet, dass die Sebazinsäure-bis-2-ethyl-hexylester in einem Mischverhältnis von 0.005 bis 0.3 Gewichtsprozent dem 1,1,1,2-Tetrafluorethan und Dimethyläther beigemischt ist.

5. Verwendung eines Gasgemisches nach einem der Patentansprüche 1 bis 4 zur Funktionsprüfung von Rauchmeldern aller Typen.

## Claims

1. Gas mixture for forming an aerosol for testing the operation of a smoke detector, comprising 80 to 60 wt % of 1,1,1,2-tetrafluoroethane and 20 to 40 wt % of a pressure-reducing gas that is composed of at least one of the substances n-butane, isobutane, a mixture of propane/n-butane, a mixture of propane/isobutane, dimethyl ether (CH₃-O-CH₃), methylal (CH₃-O-CH₂-O-CH₃), methyl ethyl ether (CH₃-O-CH₂-CH₃) and ethenyl methyl ether (CH₃-O-CH=CH₂), characterized in that the gas mixture contains an added aerosol-forming component that is composed of at least one of the substances bis(2-ethylhexyl) sebacate, sebacic acid diesters containing various ester groups, paraffin oil, dibutyl phthalate, bis(2-ethylhexyl) phthalate, butyloxyethanol, triethylene glycol and triethylene glycol diester and is added to the said gas mixture in a mixing ratio of not more than 2 wt %.

2. Gas mixture according to Patent Claim 1, characterized in that the gas mixture contains up to 72 to 68 wt % of 1,1,1,2-tetrafluoroethane and up to 28 to 32 wt % of dimethyl ether.

3. Gas mixture according to Patent Claim 2, characterized in that the aerosol-forming component is bis(2-ethylhexyl) sebacate and it is added to the 1,1,1,2-tetrafluoroethane and the dimethyl ether in a mixing ratio of not more than 2 wt %.

4. Gas mixture according to Patent Claim 4, characterized in that the bis(2-ethylhexyl) sebacate is added to the 1,1,1,2-tetrafluoroethane and dimethyl ether in a mixing ratio of 0.005 to 0.3 wt %.

5. Use of a gas mixture according to one of Patent Claims 1 to 4 for testing the operation of smoke detectors of all types.

## Revendications

1. Mélange de gaz pour la formation d'un aérosol en vue de vérifier le fonctionnement d'un détecteur de fumée, constitué de 80 à 60 % en poids de 1,1,1,2-tétrafluoroéthane et de 20 à 40 % en poids d'un gaz abaissant la pression, qui est constitué d'au moins l'une des substances suivantes butane normal, isobutane, un mélange de propane et de butane normal, un mélange de propane et d'isobutane, oxyde diméthylique (CH₃-O-CH₃), méthylal (CH₃-O-CH₂-O-CH₃), oxyde méthyléthylique (CH₃-O-CH₂-CH₃) et oxyde éthénylméthylique (CH₃-O-CH=CH₂), caractérisé en ce que le mélange de gaz contient un constituant ajouté formant un aérosol, qui est constitué d'au moins l'un de l'ester bis-2-éthylhexylique de l'acide sébacique, d'un diester de l'acide sébacique avec divers groupes ester, d'une huile de paraffine, de l'ester dibutylique de l'acide phtalique, de l'ester bis-2-éthylhexylique de l'acide phtalique, du butyloxyéthanol, du triéthylèneglycol et du diester de triéthylèneglycol, et est ajouté audit mélange de gaz en un rapport de mélange de 2 % en poids au maximum.

2. Mélange de gaz suivant la revendication 1, caractérisé en ce que le mélange de gaz contient pour 72 à 68 % en poids de 1,1,1,2-tétrafluoroéthane et pour 28 à 32 % en poids d'oxyde diméthylique.

3. Mélange de gaz suivant la revendication 2, caractérisé en ce que le constituant formant un aérosol est l'ester bis-2-éthylhexylique de l'acide sébacique et il est ajouté en un rapport de mélange de 2 % en poids au maximum, au 1,1,1,2-tétrafluoroéthane et à l'oxyde diméthylique.

4. Mélange de gaz suivant la revendication 3, caractérisé en ce que l'ester bis-2-éthylhexylique de l'acide sébacique est ajouté en un rapport de mélange de 0,005 à 0,3 % en poids au 1,1,1,2-tétrafluoroéthane et à l'oxyde diméthylique.

5. Diversion d'un mélange de gaz suivant l'une des revendications 1 à 4, pour vérifier le fonctionnement de détecteurs de fumée de tous types.
